# EUROPEAN PATENT APPLICATION

(11) **EP 4 451 015 A1**
(43) Date of publication of application: **23.10.2024**
(21) Application number: 21967788.7
(22) Date of filing: 17.12.2021
(51) Int. Cl.: G01S 19/42

(54) **MEASUREMENT METHOD AND APPARATUS FOR GLOBAL NAVIGATION SATELLITE SYSTEM (GNSS)**

(71) Applicant: Beijing Xiaomi Mobile Software Co., Ltd., Beijing 100085 (CN)
(72) Inventor: ZHU, Yajun, Beijing 100085 (CN)
(74) Representative: Gunzelmann, Rainer
(86) International application number: PCT/CN2021/139335
(87) International publication number: WO 2023/108656

(57) **Abstract**

Embodiments of the present application provide a measurement method and apparatus for a global navigation satellite system (GNSS). The solution is: in response to expiration of current GNSS position information of a terminal, performing GNSS measurement again when the terminal is in a connected state. In the present application, a terminal can quickly and effectively update GNSS position information when the GNSS position information is expired, by means of performing GNSS measurement when the terminal is in the connected state, thereby further acquiring the accurate uplink synchronization information TA, and avoiding interference between uplink transmission of different terminals.

## Description

### TECHNICAL FIELD

The disclosure relates to a field of wireless communication technology, in particular to a global navigation satellite system (GNSS) measurement method and apparatus.

### BACKGROUND

In satellite communication scenarios, it takes a longer time to transmit data. For uplink and downlink transmissions, a terminal needs to know its position information in order to compensate for uplink synchronization. In the related art, if global navigation satellite system (GNSS) information has expired, the terminal needs to obtain the GNSS information. However, the traditional method requires the terminal to enter an idle state, and this may bring unnecessary delay and power consumption.

### SUMMARY

Embodiments of the disclosure provide a global navigation satellite system (GNSS) measurement method and apparatus, to ensure that a terminal can obtain GNSS position information in a timely and effective manner by performing a GNSS measurement when the terminal is in a connected state, thereby avoiding uplink transmission interference between different terminals.

According to a first aspect of embodiments of the disclosure, a GNSS measurement method, applied to a terminal, is provided. The method includes: performing a GNSS measurement in a connected state in response to expiration of current GNSS position information of the terminal.

According to the GNSS measurement method provided by the embodiments of the disclosure, to ensure that a terminal can obtain the GNSS position information in a timely and effective manner, the GNSS measurement is performed when the terminal is in the connected state, thereby avoiding uplink transmission interference between different terminals.

According to a second aspect of embodiments of the disclosure, a GNSS measurement method, applied to a network device, is provided. The method includes: determining that current GNSS position information of a terminal has expired, and causing the terminal to maintain in a connected state and to perform a GNSS measurement.

According to the GNSS measurement method provided by the embodiments of the disclosure, to ensure that a terminal can obtain the GNSS position information in a timely and effective manner, the terminal is caused to maintain in the connected state and to perform the GNSS measurement, thereby avoiding uplink transmission interference between different terminals.

According to a third aspect of embodiments of the disclosure, a communication apparatus is provided. The communication apparatus has an ability to implement part or all of the functions of the terminal in the method described in the first aspect. For example, the communication apparatus may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module, coupled to the transceiver module and the processing module, and configured to store necessary computer programs and data for the communication apparatus.

As an example, the processing module may be a processor. The transceiver module may be a transceiver or a communication interface. The storage module may be a memory.

According to a fourth aspect of embodiments of the disclosure, a communication apparatus is provided. The communication apparatus has an ability to implement part or all of the functions of the network device in the method described in the second aspect. For example, the communication apparatus may have functions of some or all of the embodiments of the disclosure, or may have a function of independently implementing any embodiment of the disclosure. The functions can be implemented by hardware, or can be implemented by executing corresponding software using the hardware. The hardware or software includes one or more units or modules corresponding to the above functions.

In an implementation, the communication apparatus includes: a transceiver module and a processing module. The processing module is configured to support the communication apparatus to perform corresponding functions in the above method. The transceiver module is configured to support communication between the communication apparatus and other devices. The communication apparatus may further include a storage module, coupled to the transceiver module and the processing module, and configured to store necessary computer programs and data for the communication apparatus.

As an example, the processing module may be a processor. The transceiver module may be a transceiver or a communication interface. The storage module may be a memory.

According to a fifth aspect of embodiments of the disclosure, a communicating apparatus is provided. The communicating apparatus includes: a processor. When the processor calls a computer program stored in a memory, the method described in the first aspect above is implemented.

According to a sixth aspect of embodiments of the disclosure, a communicating apparatus is provided. The communicating apparatus includes: a processor. When the processor calls a computer program stored in a memory, the method described in the second aspect above is implemented.

According to a seventh aspect of embodiments of the disclosure, a communication apparatus is provided. The communication apparatus includes: a processor, and a memory having a computer program stored thereon. The processor executes the computer program stored in the memory, to cause the communication apparatus to implement the method described in the first aspect above.

According to an eighth aspect of embodiments of the disclosure, a communication apparatus is provided. The communication apparatus includes: a processor, and a memory having a computer program stored thereon. The processor executes the computer program stored in the memory, to cause the communication apparatus to implement the method described in the second aspect above.

According to a ninth aspect of embodiments of the disclosure, a communication apparatus is provided. The communication apparatus includes: a processor and an interface circuit. The interface circuit is configured to receive code instructions and transmit them to the processor. The processor is configured to run the code instructions to cause the communication apparatus to perform the method described in the first aspect above.

According to a tenth aspect of embodiments of the disclosure, a communication apparatus is provided. The communication apparatus includes: a processor and an interface circuit. The interface circuit is configured to receive code instructions and transmit them to the processor. The processor is configured to run the code instructions to cause the communication apparatus to perform the method described in the second aspect above.

According to an eleventh aspect of embodiments of the disclosure, a communication system is provided. The system includes the communication apparatus of the third aspect and the communication apparatus of the fourth aspect; or the system includes the communication apparatus of the fifth aspect and the communication apparatus of the sixth aspect; or the system includes the communication apparatus of the seventh aspect and the communication apparatus of the eighth aspect; or the system includes the communication apparatus of the ninth aspect and the communication apparatus of the tenth aspect.

According to a twelfth aspect of embodiments of the disclosure, a computer-readable storage medium is provided. The computer-readable storage medium is configured to store instructions used by the above terminal. When the instructions are executed, the terminal is caused to implement the method of the first aspect.

According to a thirteenth aspect of embodiments of the disclosure, a computer-readable storage medium is provided. The computer-readable storage medium is configured to store instructions used by the above network device. When the instructions are executed, the network device is caused to implement the method of the second aspect.

According to a fourteenth aspect of embodiments of the disclosure, a computer program product including a computer program is provided. When the computer program is run by a computer, the computer is caused to implement the method of the first aspect.

According to a fifteenth aspect of embodiments of the disclosure, a computer program product including a computer program is provided. When the computer program is run by a computer, the computer is caused to implement the method of the second aspect.

According to a sixteenth aspect of embodiments of the disclosure, a chip system is provided. The chip system includes at least one processor and an interface for supporting the terminal in realizing the functions involved in the first aspect, e.g., at least one of determining or processing data or information involved in the method described above. In a possible design, the chip system further includes a memory. The memory is configured to store necessary computer programs and data of the terminal. The chip system may consist of chips or may include a chip and other discrete devices.

According to a seventeenth aspect of embodiments of the disclosure, a chip system is provided. The chip system includes at least one processor and an interface for supporting the network device in realizing the functions involved in the second aspect, e.g., at least one of determining or processing data or information involved in the method described above. In a possible design, the chip system further includes a memory. The memory is configured to store necessary computer programs and data of the network device. The chip system may consist of chips or may include a chip and other discrete devices.

According to an eighteenth aspect of embodiments of the disclosure, a computer program is provided. When the computer program is running on a computer, the computer is caused to implement the method of the first aspect.

According to a nineteenth aspect of embodiments of the disclosure, a computer program is provided. When the computer program is running on a computer, the computer is caused to implement the method of the second aspect.

### BRIEF DESCRIPTION OF THE DRAWINGS

In order to clearly illustrate technical solutions of embodiments of the disclosure or background technologies, a description of drawings used in the embodiments or the background technologies is given below.
FIG. 1 is a schematic diagram of a communication system of an embodiment of the disclosure.
FIG. 2 is a flowchart of a global navigation satellite system (GNSS) measurement method of an embodiment of the disclosure.
FIG. 3 is a flowchart of a GNSS measurement method of an embodiment of the disclosure.
FIG. 4 is a flowchart of a GNSS measurement method of an embodiment of the disclosure.
FIG. 5 is a flowchart of a GNSS measurement method of an embodiment of the disclosure.
FIG. 6 is a flowchart of a GNSS measurement method of an embodiment of the disclosure.
FIG. 7 is a flowchart of a GNSS measurement method of an embodiment of the disclosure.
FIG. 8 is a flowchart of a GNSS measurement method of an embodiment of the disclosure.
FIG. 9 is a flowchart of a GNSS measurement method of an embodiment of the disclosure.
FIG. 10 is a flowchart of a GNSS measurement method of an embodiment of the disclosure.
FIG. 11 is a flowchart of a GNSS measurement method of an embodiment of the disclosure.
FIG. 12 is a flowchart of a GNSS measurement method of an embodiment of the disclosure.
FIG. 13 is a block diagram of a GNSS measurement apparatus of an embodiment of the disclosure.
FIG. 14 is a block diagram of a communication apparatus of an embodiment of the disclosure.
FIG. 15 is a block diagram of a chip of an embodiment of the disclosure.

### DETAILED DESCRIPTION

Reference will now be made in detail to embodiments, examples of which are illustrated in the accompanying drawings. The following description refers to the accompanying drawings in which the same numbers in different drawings represent the same or similar elements unless otherwise represented. The implementations set forth in the following description of embodiments do not represent all implementations consistent with the disclosure. Instead, they are merely examples of apparatuses and methods consistent with aspects related to the disclosure as recited in the appended claims.

For ease of understanding, the terms involved in this disclosure are introduced at first.

### 1. Global navigation satellite system (GNSS)

GNSS is a space-based radio navigation and positioning system that can provide a user with all-weather 3D coordinates, speed and time information anywhere on the Earth's surface or in near-Earth space. GNSS can use a group of observation parameters, such as satellite pseudoranges, ephemeris, satellite launch time and other parameters, as well as user clock differentials, to locate the user's terminal.

### 2. Radio resource control (RRC)

RRC carries out wireless resource management, control and scheduling through certain strategies and means to make full use of the limited wireless network resources in order to reach the planned coverage area while meeting the service quality requirements, thereby improving service capacity and resource utilization.

In order to better understand a GNSS measurement method disclosed in embodiments of the disclosure, a communication system to which the embodiments of the disclosure is applied is first described below.

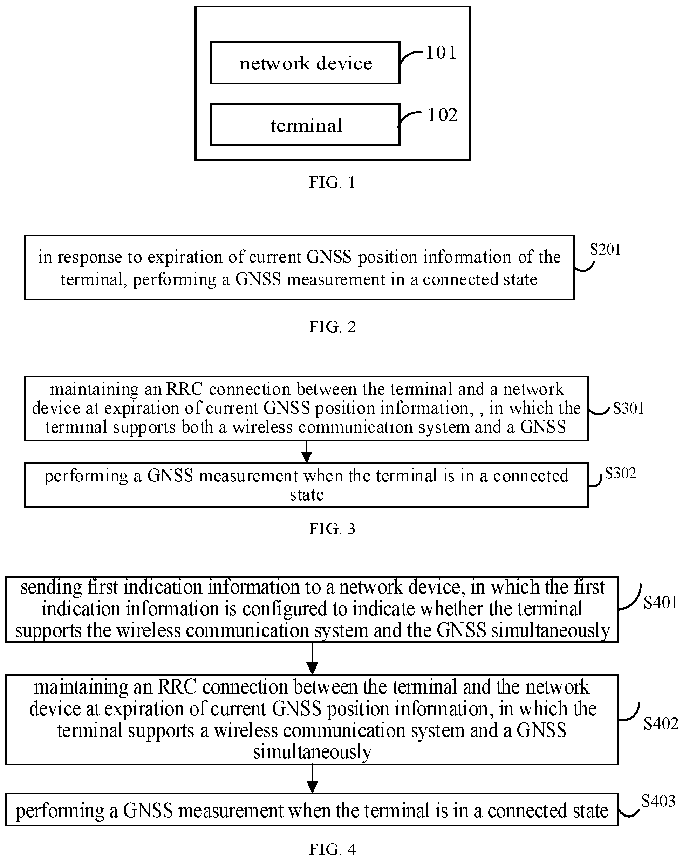

As illustrated in FIG. 1, FIG. 1 is a schematic diagram illustrating a communication system according to an embodiment of the disclosure. The communication system may include, but is not limited to, a network device and a terminal. The number and the form of devices illustrated in FIG. 1 are only for examples and do not constitute a limitation on the embodiments of the disclosure, and two or more network devices and two or more terminals may be included in practical applications. The communication system illustrated in FIG. 1 includes, for example, one network device 101 and one terminal 102.

It is noteworthy that the technical solutions of the embodiments of the disclosure can be applied to various communication systems, such as, a long term evolution (LTE) system, a 5th generation (5G) mobile communication system, a 5G new radio (NR) system, or other future new mobile communication systems.

The network device 101 in embodiments of the disclosure is an entity on a network side for transmitting or receiving signals. For example, the network device 101 may be an evolved NodeB (eNB), a transmission reception point (TRP), a next generation NodeB (gNB) in a NR system, a base station in other future mobile communication systems, or an access node in a Wi-Fi^{™} system. The specific technology and specific device form adopted by the network device are not limited in the embodiments of the disclosure. The network device according to embodiments of the disclosure may be composed of a central unit (CU) and a distributed unit (DU). The CU may also be called control unit. The use of CU-DU structure allows to divide a protocol layer of the network device, such as a base station, such that some functions of the protocol layer are placed in the CU for centralized control, and remaining some or all functions of the protocol layer are distributed in the DU, and the DU is centrally controlled by the CU.

The terminal 102 in the embodiments of the disclosure is an entity on a user side for receiving or transmitting signals, such as a cellular phone. The terminal may also be referred to as terminal, user equipment (UE), mobile station (MS), mobile terminal (MT), and the like. The terminal can be a car with communication functions, a smart car, a mobile phone, an Internet of Things (IoT) device (e.g., NB-IoT or (e) machine type communication (MTC)), a wearable device, a Pad, a computer with wireless transceiver functions, a virtual reality (VR) terminal, an augmented reality (AR) terminal, a wireless terminal in industrial control, a wireless terminal in self-driving, a wireless terminal in remote medical surgery, a wireless terminal in smart grid, a wireless terminal in transportation safety, a wireless terminal in smart city, a wireless terminal in smart home, etc. The specific technology and specific device form adopted by the terminal are not limited in the embodiments of the disclosure.

It is understandable that the communication system described in the embodiments of the disclosure is intended to clearly illustrate the technical solutions according to the embodiments of the disclosure, and does not constitute a limitation on the technical solutions according to the embodiments of the disclosure. It is understandable by those skilled in the art that as system architectures evolve and new business scenarios emerge, the technical solutions according to the embodiments of the disclosure are also applicable to similar technical problems.

It is understood that multiple solutions in the embodiments of the disclosure may be practiced individually or in combination with each other, which is not limited in the disclosure.

The GNSS measurement methods and the communication apparatuses provided in the disclosure are described in detail below in combination with the accompanying drawings.

FIG. 2 is a flowchart of a GNSS measurement method of an embodiment of the disclosure. The method is applied to a terminal. As illustrated in FIG. 2, the method includes the following step.

At step S201, in response to expiration of current GNSS position information of the terminal, a GNSS measurement is performed when the terminal is in a connected state.

The GNSS position information of the terminal measured by the GNSS measurement is used to determine a Timing Advance (TA) to compensate for transmission delay in an uplink transmission in satellite communication.

In an embodiment of the disclosure, the terminal can determine whether the current GNSS position information has expired by monitoring a validity period of the current GNSS position information. After the current GNSS position information has expired, if the terminal continues to determine a TA based on the current GNSS position information, there may be difference between the determined TA and the actual TA due to the invalidity of the current GNSS position information, which may make it difficult for the terminal and the network device to better synchronize and may result in uplink transmission interference between different terminals.

In order to improve an accuracy of information or data transmission, it is required to timely update the GNSS position information of the terminal in the embodiments of the disclosure in order to obtain an accurate TA. That is, it is required to determine the GNSS position information of the terminal again when the current GNSS position information of the terminal has expired, i.e., the terminal needs to perform the GNSS measurement again. The terminal may perform the GNSS measurement again after entering an inactive state (idle state), but the GNSS measurement performed by the terminal in the idle state may cause unnecessary delay and power consumption. In order to obtain the GNSS position information of the terminal in a timely and effective manner, in an embodiment of the disclosure, a new mechanism may be introduced, so that the terminal may perform the GNSS measurement again in a connected state. That is, when performing the GNSS measurement again, the terminal does not need to enter an idle state, but can continue to remain in the connected state. Since the terminal maintains in the connected state, the timeliness of the GNSS measurement may be improved.

The validity period of the GNSS position information of the terminal may be predefined or may be notified by the network device to the terminal through system information or a signaling. In some implementations, the network device may notify the terminal of the validity period of the GNSS position information through an RRC signaling. In other implementations, the network device may notify the terminal of the validity period of the GNSS position information through a media access control-control element (MAC-CE) signaling. In other implementations, the network device may notify the terminal of the validity period of the GNSS position information through a physical layer signaling.

With the GNSS measurement method provided in the embodiment of the disclosure, the terminal performs the GNSS measurement in the connected state to ensure that the terminal can update the GNSS position information in a timely and effective manner when the GNSS position information has expired, and thus an accurate uplink synchronization information TA may be obtained, thereby avoiding uplink transmission interference between different terminals.

FIG. 3 is a flowchart of a GNSS measurement method of an embodiment of the disclosure. The method is applied to a terminal. As illustrated in FIG. 3, the method includes the following steps.

At step S301, an RRC connection between the terminal and a network device is maintained at expiration of current GNSS position information, in which the terminal supports both a wireless communication system and a GNSS.

In an embodiment of the disclosure, the terminal may determine whether the current GNSS position information has expired by monitoring a validity period of the current GNSS position information. After the current GNSS position information has expired, if the terminal continues to determine a TA based on the current GNSS position information, there may be difference between the determined TA and the actual TA due to the invalidity of the current GNSS position information, which may make it difficult for the terminal and the network device to better synchronize and may result in uplink transmission interference between different terminals.

In order to improve an accuracy of information or data transmission, it is required to timely update the GNSS position information of the terminal in the embodiments of the disclosure in order to obtain an accurate TA. That is, it is required to determine the GNSS position information of the terminal again when the current GNSS position information of the terminal has expired, i.e., the terminal needs to perform the GNSS measurement again. The terminal may perform the GNSS measurement again after entering an idle state, but the GNSS measurement performed by the terminal in the idle state may cause unnecessary delay and power consumption. In order to obtain the GNSS position information of the terminal in a timely and effective manner, in the embodiment of the disclosure, a new mechanism may be introduced, so that the terminal may perform the GNSS measurement again in a connected state.

As a possible implementation, the terminal may support the wireless communication system and the GNSS simultaneously. Since the terminal may support the wireless communication system and the GNSS simultaneously, the terminal can continue to maintain the RRC connection with the wireless communication system when the current GNSS position information has expired, so that the terminal can maintain in the connected state to perform the GNSS measurement again without having to enter the idle state.

The wireless communication system includes a cellular system.

At step S302, a GNSS measurement is performed when the terminal is in a connected state.

In the embodiment of the disclosure, the terminal does not need to enter the idle state when performing the GNSS measurement again, but can continue to maintain in the connected state. If the terminal maintains in the connected state, the timeliness of the GNSS measurement may be improved.

With the GNSS measurement method provided in the embodiment of the disclosure, an RRC connection between the terminal and the network device is maintained when the current GNSS position information of the terminal has expired. The terminal supports both the wireless communication system and the GNSS. In response to the expiration of the current GNSS position information of the terminal, the terminal performs the GNSS measurement while it is in a connected state. Through this method, the terminal can perform the GNSS measurement in the connected state to ensure that the terminal can obtain the GNSS position information in a timely and effective manner.

FIG. 4 is a flowchart of a GNSS measurement method of an embodiment of the disclosure. The method is applied to a terminal. As illustrated in FIG. 4, the method includes the following steps.

At step S401, first indication information is sent to a network device, in which the first indication information is configured to indicate whether the terminal supports the wireless communication system and the GNSS simultaneously.

The first indication information is sent to the network device before the step of "in response to the expiration of the current GNSS position information of the terminal, performing the GNSS measurement in the connected state".

As a possible implementation, "0" represents that the terminal has no ability of supporting both the wireless communication system and the GNSS to simultaneously work, and "1" represents that the terminal has an ability of supporting both the wireless communication system and the GNSS to simultaneously work.

Depending on whether the terminal supports the wireless communication system and the GNSS simultaneously, "0" or "1" may be used as the first indication information and sent to the network device.

As another possible implementation, a measurement duration required for the GNSS measurement of the terminal may be determined and indicated to the network device. The GNSS measurement duration may be an average measurement duration over a period of time, the latest GNSS measurement duration, or a measurement duration agreed upon by a protocol or configured by a network.

Optionally, the terminal determines the measurement duration required for the GNSS measurement according to historical measurement situations and indicates the measurement duration to the network device. In some implementations, the terminal may indicate the measurement duration to the network device separately. In other implementations, the terminal may indicate the measurement duration to the network device via the first indication information.

The measurement duration required for the GNSS measurement may represent a GNSS measurement capability of the terminal, and different durations correspond to different capabilities. For example, the shorter the measurement duration required for measurement, the higher the GNSS measurement capability. The GNSS measurement capability of the terminal can be expressed in levels, where capability 1 represents the highest level, and the larger the number, the lower the level.

In some implementations, the measurement duration is indicated separately. Optionally, the GNSS measurement duration of the terminal can be reported directly, or the level of the GNSS measurement capability can be determined according to the measurement duration and reported to the network device.

In other implementations, the terminal synchronically indicates the measurement duration via the first indication information. For example, "00" may represent that the terminal does not support both the wireless communication system and the GNSS to simultaneously work, and "01" may represent that the terminal supports both the wireless communication system and the GNSS to simultaneously work and that the GNSS measurement capability of the terminal is capability 1. "10" may represent that the terminal supports both the wireless communication system and the GNSS to simultaneously work and that the GNSS measurement capability of the terminal is capability 2. "11" may represent that the terminal supports both the wireless communication system and the GNSS to simultaneously work and that the GNSS measurement capability of the terminal is capability 3.

Depending on the GNSS measurement capability of the terminal, "00", "01", "10" or "11" may be used as the first indication information and sent to the network device.

At step S402, an RRC connection between the terminal and the network device is maintained at expiration of current GNSS position information, in which the terminal supports a wireless communication system and a GNSS simultaneously.

At step S403, a GNSS measurement is performed when the terminal is in a connected state.

The specific implementations of steps S402-S403 can be referred to the relevant descriptions in the embodiments of the disclosure and will not be repeated here.

With the GNSS measurement method provided in the embodiment of the disclosure, it is determined whether the terminal can perform a GNSS measurement in a connected state according to the first indication information sent by the terminal to the network device, the GNSS measurement duration is reported, and the network device can learn the GNSS measurement capability of the terminal according to the reported GNSS measurement duration. Moreover, an RRC connection between the terminal and the network device is maintained when the current GNSS position information of the terminal has expired, in which the terminal supports the wireless communication system and the GNSS simultaneously, and the terminal performs the GNSS measurement again in the connected state in response to the expiration of the current GNSS position information of the terminal. Through this method, the terminal can perform the GNSS measurement in the connected state in order to ensure that the terminal can obtain the GNSS position information in a timely and effective manner.

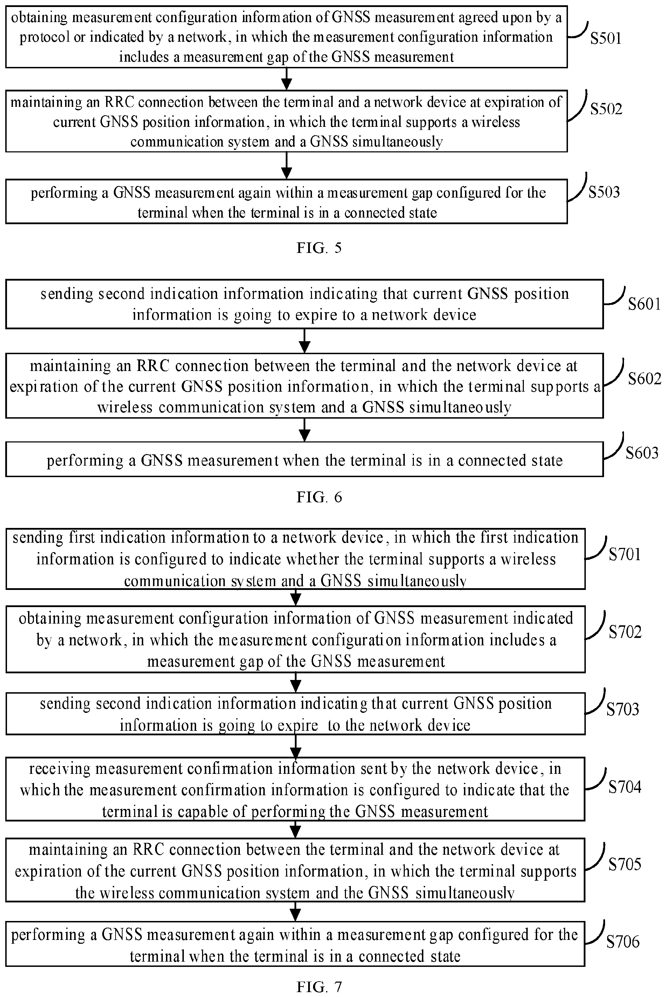

FIG. 5 is a flowchart of a GNSS measurement method of an embodiment of the disclosure. The method is applied to a terminal. As illustrated in FIG. 5, the method includes the following steps.

At step S501, measurement configuration information of GNSS measurement agreed upon by a protocol or indicated by a network is obtained, in which the measurement configuration information includes a measurement gap of the GNSS measurement.

The measurement configuration information is used to instruct the terminal to perform a GNSS measurement within a measurement gap.

In some implementations, the measurement configuration information is agreed upon by a protocol, and the measurement gap is a fixed value.

In other implementations, the measurement configuration information is indicated by a network, and the measurement gap may be determined according to the first indication information sent by the terminal to the network device. That is, the network device may configure the measurement gap of the GNSS measurement according to the measurement duration of the terminal in the first indication information.

The first indication information is configured to indicate whether the terminal supports the wireless communication system and the GNSS simultaneously, and it synchronically indicates the measurement duration of the terminal, so that the network device can obtain the GNSS measurement situation of the terminal based on the first indication information. In the case where the terminal can support the wireless communication system and the GNSS simultaneously, the GNSS measurement gap can be configured for the terminal according to the measurement duration in the first indication information.

At step S502, an RRC connection between the terminal and a network device is maintained at expiration of current GNSS position information, in which the terminal supports a wireless communication system and a GNSS simultaneously.

At step S503, a GNSS measurement is performed again within a measurement gap configured for the terminal when the terminal is in a connected state.

When the GNSS position information has expired, the terminal performs the GNSS measurement within the configured measurement gap.

The specific implementations of steps S502-S503 can be referred to the relevant descriptions in the embodiments of the disclosure, and will not be repeated here.

With the GNSS measurement method provided in the embodiment of the disclosure, the terminal performs the GNSS measurement within the configured time gap. The time gap can be configured according to the first indication information, so that the size of the time gap is more compatible with the measurement duration of the terminal.

FIG. 6 is a flowchart of a GNSS measurement method of an embodiment of the disclosure. The method is applied to a terminal. As illustrated in FIG. 6, the method includes the following steps.

At step S601, second indication information indicating that current GNSS position information is going to expire is sent to a network device.

As a possible implementation, if the GNSS position information of the terminal is about to expire, the terminal reports the second indication information within a preset time period before the expiration of the GNSS position information. The second indication information is used to indicate that the current GNSS position information of the terminal is about to expire.

The preset time period can be agreed upon by a protocol or indicated by a network device via a signaling.

As another possible implementation, the terminal may obtain an expiration time of the current GNSS position information and indicate the expiration time to the network device. Optionally, the terminal obtains the expiration time of the current GNSS position information according to the validity period of the GNSS position information and an acquisition time of the current GNSS position information.

In some implementations, the terminal may indicate the expiration time to the network device separately. In other implementations, the terminal may synchronically indicate the expiration time to the network device via the second indication information.

In some implementations, after the second indication information is sent, the network device sends measurement confirmation information to the terminal. The measurement confirmation information is configured to indicate that the terminal is capable of performing the GNSS measurement.

At step S602, an RRC connection between the terminal and the network device is maintained at expiration of the current GNSS position information, in which the terminal supports a wireless communication system and a GNSS simultaneously.

At step S603, a GNSS measurement is performed when the terminal is in a connected state.

The terminal performs the GNSS measurement within a measurement gap. The measurement gap may be agreed upon by a protocol or indicated by a network.

The specific implementations of steps S602-S603 can be referred to the relevant descriptions in the embodiments of the disclosure, and will not be repeated here.

With the GNSS measurement method provided in the embodiment of the disclosure, the terminal sends the second indication information to the network device when the current GNSS position information of the terminal is about to expire in order to instruct the terminal to carry out the GNSS measurement. No uplink or downlink transmission, monitoring or other operations will be performed during the measurement duration.

FIG. 7 is a flowchart of a GNSS measurement method of an embodiment of the disclosure. The method is applied to a terminal. As illustrated in FIG. 7, based on the GNSS measurement method provided in the disclosure, the process of GNSS measurement in a practical application scenario includes the following steps.

At step S701, first indication information is sent to a network device, in which the first indication information is used to indicate whether the terminal supports a wireless communication system and a GNSS simultaneously.

At step S702, measurement configuration information of GNSS measurement indicated by a network is obtained, in which the measurement configuration information includes a measurement gap of the GNSS measurement.

At step S703, second indication information indicating that current GNSS position information is about to expire is sent to the network device.

At step S704, measurement confirmation information sent by the network device is received, in which the measurement confirmation information is used to indicate that the terminal can perform the GNSS measurement.

At step S705, an RRC connection between the terminal and the network device is maintained at expiration of current GNSS position information, in which the terminal supports the wireless communication system and the GNSS simultaneously.

At step S706, a GNSS measurement is performed again within a measurement gap configured for the terminal when the terminal is in a connected state.

Specific implementations of the embodiment can be referred to the relevant descriptions in the various embodiments of the disclosure and will not be repeated herein.

With the GNSS measurement method provided in the embodiment of the disclosure, the GNSS measurement capability of the terminal is obtained through the first indication information. The terminal is instructed to perform the GNSS measurement within a specified measurement gap through the measurement configuration information. Through the second indication information and the measurement confirmation information, notification and confirmation of the GNSS measurement is completed with the network device. In this way, the GNSS measurement is performed when the terminal is in the connected state to ensure that the terminal can update the GNSS position information in a timely and effective manner when the GNSS position information has expired, so that an accurate uplink synchronization information TA can be obtained, thereby avoiding uplink transmission interference between different terminals.

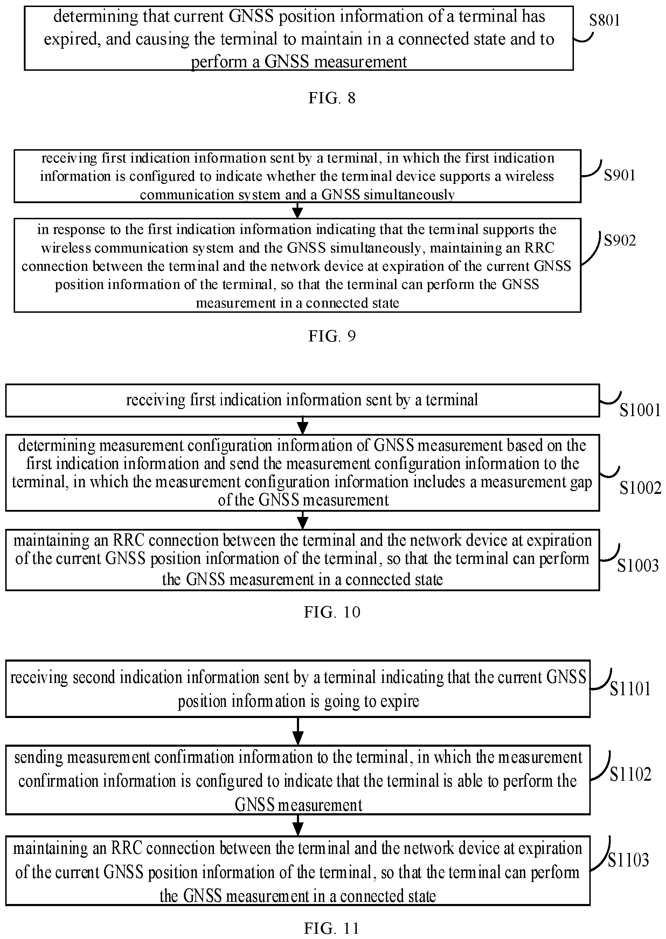

FIG. 8 is a flowchart of a GNSS measurement method of an embodiment of the disclosure. The method is applied to a network device. As illustrated in FIG. 8, the method includes the following step.

At step S801, it is determined that current GNSS position information of a terminal has expired, and the terminal is caused to maintain in a connected state and to perform a GNSS measurement.

In order to improve an accuracy of information or data transmission, in the embodiments of the disclosure, it is required to perform the GNSS measurement again when the current GNSS position information of the terminal has expired in order to obtain an accurate TA to compensate for uplink transmission. The terminal may perform the GNSS measurement again after entering an idle state, which may cause unnecessary delay and power consumption. In order to obtain the GNSS position information of the terminal in a timely and effective manner, in the embodiments of the disclosure, a new mechanism may be introduced, so that the terminal can perform the GNSS measurement when it is in the connected state.

With the GNSS measurement method provided in the embodiment of the disclosure, the terminal can be caused to maintain in the connected state and perform the GNSS measurement to ensure that the terminal can obtain the GNSS position information in a timely and effective manner, thereby avoiding uplink transmission interference between different terminals.

FIG. 9 is a flowchart of a GNSS measurement method of an embodiment of the disclosure. The method is applied to a network device. As illustrated in FIG. 9, the method includes the following steps.

At step S901, first indication information sent by a terminal is received, in which the first indication information is configured to indicate whether the terminal supports a wireless communication system and a GNSS simultaneously.

As a possible implementation, the first indication information indicates whether the terminal supports the wireless communication system and the GNSS simultaneously.

The first indication information may synchronically indicate a measurement duration required for the GNSS measurement of the terminal. The measurement duration may also be indicated separately by the terminal.

At step S902, in response to the first indication information indicating that the terminal supports the wireless communication system and the GNSS simultaneously, an RRC connection between the terminal and the network device is maintained at expiration of the current GNSS position information of the terminal, so that the terminal can perform the GNSS measurement in a connected state.

If the first indication information indicates that the terminal supports the wireless communication system and the GNSS simultaneously, it means that the terminal can perform the GNSS measurement in the connected state. The terminal can continue to maintain the RRC connection with the wireless communication system, so that it can maintain in the connected state and perform the GNSS measurement again without having to enter an idle state.

With the GNSS measurement method provided in the embodiment of the disclosure, the GNSS measurement situation of the terminal is determined based on the first indication information. Therefore, when the first indication information indicates that the terminal supports the wireless communication system and the GNSS simultaneously, the terminal maintains the RRC connection with the wireless communication system when the GNSS position information of the terminal has expired. The GNSS measurement can be performed while the terminal is in the connected state to ensure that the terminal can obtain the GNSS position information in a timely and effective manner, thereby avoiding uplink transmission interference between different terminals.

FIG. 10 is a flowchart of a GNSS measurement method of an embodiment of the disclosure. The method is applied to a network device. As illustrated in FIG. 10, the method includes the following steps.

At step S1001, first indication information sent by a terminal is received.

The specific implementation of step S1001 can be referred to the relevant descriptions in the embodiments of the disclosure and will not be repeated here.

At step S1002, measurement configuration information of GNSS measurement is determined based on the first indication information and sent to the terminal, in which the measurement configuration information includes a measurement gap of the GNSS measurement.

According to the first indication information, a measurement duration required for the GNSS measurement is determined. According to the measurement duration, a suitable measurement gap is configured for the terminal and sent to the terminal.

Optionally, the measurement gap may also be agreed upon by a protocol or set as a fixed value.

At step S1003, an RRC connection between the terminal and the network device is maintained at expiration of the current GNSS position information of the terminal, so that the terminal performs the GNSS measurement in a connected state.

The specific implementation of step S1003 can be referred to the relevant descriptions in the embodiments of the disclosure and will not be repeated here.

With the GNSS measurement method provided in the embodiment of the disclosure, a time gap is configured according to the first indication information, so that the size of the time gap can be more compatible with the measurement duration of the terminal.

FIG. 11 is a flowchart of a GNSS measurement method of an embodiment of the disclosure. The method is applied to a network device. As illustrated in FIG. 11, the method includes the following steps.

At step S1101, second indication information sent by a terminal is received, in which the second indication information indicates that the current GNSS position information is going to expire.

As a possible implementation, the second indication information indicates that the current GNSS position information is about to expire.

The second indication information may synchronically indicate an expiration time of the GNSS position information. The expiration time may also be separately indicated by the terminal.

At step S1102, measurement confirmation information is sent to the terminal, in which the measurement confirmation information is configured to indicate that the terminal is capable of performing the GNSS measurement.

At step S1103, an RRC connection between the terminal and the network device is maintained at expiration of the current GNSS position information of the terminal, so that the terminal performs the GNSS measurement in a connected state.

The specific implementations of steps S1002-S1003 can be referred to the relevant descriptions in the embodiments of the disclosure and will not be repeated here.

With the GNSS measurement method provided in the embodiment of the disclosure, when the current GNSS position information is about to expire, the notification and confirmation of the GNSS measurement is completed through the second indication information and the measurement confirmation information, and the terminal may not perform any uplink and downlink transmission, monitoring, and other operations during the measurement duration.

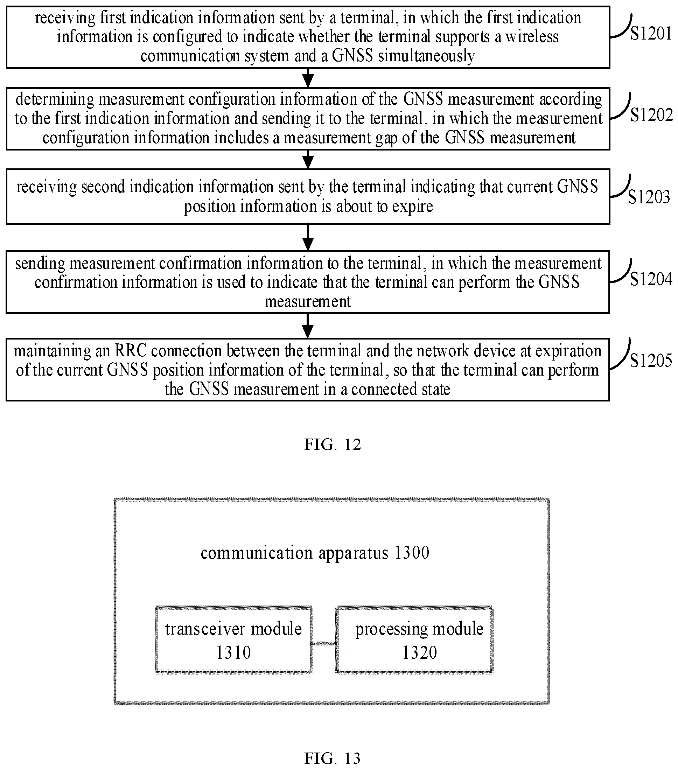

FIG. 12 is a flowchart of a GNSS measurement method of an embodiment of the disclosure. The method is applied to a network device. As illustrated in FIG. 12, based on the GNSS measurement method provided in the disclosure, the process of GNSS measurement in a practical application scenario includes the following steps.

At step S1201, first indication information sent by a terminal is received, in which the first indication information is used to indicate whether the terminal supports a wireless communication system and a GNSS simultaneously.

At step S1202, measurement configuration information of GNSS measurement is determined according to the first indication information and sent to the terminal, in which the measurement configuration information includes a measurement gap of the GNSS measurement.

At step S1203, second indication information sent by the terminal that indicates that current GNSS position information is about to expire is received.

At step S 1204, measurement confirmation information is sent to the terminal, in which the measurement confirmation information is used to indicate that the terminal can perform the GNSS measurement.

At step S 1205, an RRC connection between the terminal and the network device is maintained at expiration of the current GNSS position information of the terminal, so that the terminal can perform the GNSS measurement in a connected state.

The specific implementations of the embodiments can be referred to the relevant descriptions in the embodiments of the disclosure and will not be repeated here.

With the GNSS measurement method provided in the embodiment of the disclosure, the GNSS measurement capability of the terminal is obtained through the first indication information. The terminal is instructed to perform the GNSS measurement within the specified measurement gap via the measurement configuration information. Through the second indication information and the measurement confirmation information, notification and confirmation of the GNSS measurement is completed with the network device. In this way, the GNSS measurement is performed when the terminal is in the connected state to ensure that the terminal can update the GNSS position information in a timely and effective manner when the GNSS position information has expired, so that an accurate uplink synchronization information TA can be obtained, thereby avoiding uplink transmission interference between different terminals.

In the above-described embodiments provided in the disclosure, the method provided in the embodiments of the disclosure is described from the perspective of a network device and a terminal, respectively. In order to realize each of the above-described functions in the method provided by the embodiments of the disclosure, the network device and the terminal may include a hardware structure and/or a software module, and realize each of the above-described functions in the form of a hardware structure, a software module, or a combination of the hardware structure and the software module. A certain function of the above-described functions may be performed in the form of a hardware structure, a software module, or a combination of the hardware structure and the software module.

FIG. 13 is a block diagram of a communication apparatus 1300 provided by an embodiment of the disclosure. The communication apparatus 1300 shown in FIG. 13 may include a transceiver module 1310 and a processing module 1320. The transceiver module 1310 may include a transmitting module and a receiving module, the transmitting module is used to implement a transmitting function, and the receiving module is used to implement a receiving function. The transceiver module 1310 may implement a transmitting function and a receiving function.

The communication apparatus 1300 may be a terminal, an apparatus in the terminal, or an apparatus capable of being used together with the terminal. Alternatively, the communication apparatus 1300 may be a network device, an apparatus in the network device, or an apparatus capable of being used together with the network device.

When the communication apparatus 1300 is a terminal, the processing module 1320 is configured to perform a GNSS measurement in a connected state in response to expiration of current GNSS position information of the terminal.

Optionally, the processing module 1320 is configured to: maintain an RRC connection between the terminal and a network device at the expiration of the current GNSS position information, in which the terminal supports a wireless communication system and a GNSS simultaneously.

Optionally, the communication apparatus 1300 includes the transceiver module 1310, configured to send first indication information to the network device, in which the first indication information is configured to indicate whether the terminal supports the wireless communication system and the GNSS simultaneously.

Optionally, the transceiver module 1310 is configured to: determine a measurement duration required for the GNSS measurement of the terminal and indicate the measurement duration to the network device.

Optionally, the transceiver module 1310 is configured to: indicate the measurement duration synchronically through the first indication information.

Optionally, the transceiver module 1310 is configured to: obtain measurement configuration information of the GNSS measurement agreed upon by a protocol or indicated by a network, in which the measurement configuration information includes a measurement gap of the GNSS measurement.

Optionally, the processing module 1320 is configured to: perform the GNSS measurement within the measurement gap configured for the terminal.

Optionally, the transceiver module 1310 is configured to: receive measurement configuration information sent by the network device, in which the measurement configuration information is determined based on the first indication information sent by the terminal to the network device.

Optionally, the transceiver module 1310 is configured to: send second indication information indicating that the current GNSS position information is going to expire to the network device.

Optionally, the transceiver module 1310 is configured to: obtain an expiration time of the current GNSS position information, and indicate the expiration time to the network device.

Optionally, the transceiver module 1310 is configured to: indicate the expiration time synchronically through the second indication information.

Optionally, the transceiver module 1310 is configured to: receive measurement confirmation information sent by the network device, in which the measurement confirmation information is configured to indicate that the terminal is capable of performing the GNSS measurement.

When the communication apparatus 1300 is a network device, the processing module 1320 is configured to: determine that current GNSS position information of a terminal has expired, and cause the terminal to maintain in a connected state and to perform a GNSS measurement.

Optionally, the communication apparatus 1300 further includes the transceiver module 1310, configured to: receive first indication information sent by the terminal, in which the first indication information is configured to indicate whether the terminal supports a wireless communication system and a GNSS simultaneously.

Optionally, the processing module 1320 is configured to: maintain an RRC connection between the terminal and the network device at expiration of the current GNSS position information of the terminal, in response to the first indication information indicating that the terminal supports the wireless communication system and the GNSS simultaneously.

Optionally, the transceiver module 1310 is configured to: obtain a measurement duration required for the GNSS measurement of the terminal.

Optionally, the processing module 1320 is configured to: determine the measurement duration based on the first indication information.

Optionally, the processing module 1320 is configured to: determine measurement configuration information of the GNSS measurement based on the first indication information and send the measurement configuration information to the terminal, in which the measurement configuration information includes a measurement gap of the GNSS measurement.

Optionally, the transceiver module 1310 is configured to: receive second indication information sent by the terminal that indicates that the current GNSS position information is going to expire.

Optionally, the transceiver module 1310 is configured to: obtain an expiration time of the current GNSS position information.

Optionally, the processing module 1320 is configured to: determine the expiration time based on the second indication information.

Optionally, the transceiver module 1310 is configured to: send measurement confirmation information to the terminal, in which the measurement confirmation information is configured to indicate that the terminal is capable of performing the GNSS measurement.

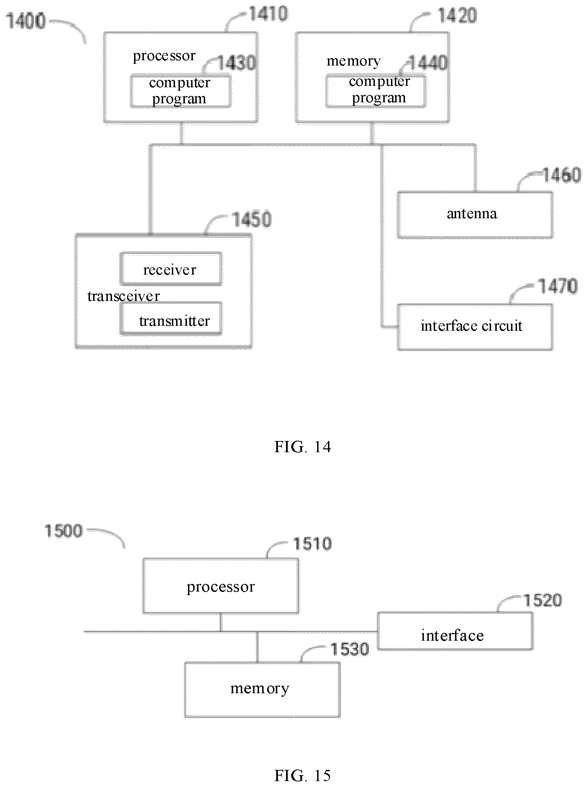

As illustrated in FIG. 14, FIG. 14 is a schematic diagram illustrating a communication apparatus 1400 according to an embodiment of the disclosure. The communication apparatus 1400 may be a network device, a terminal, or may be a chip, a chip system or a processor that supports the network device to realize the above-described methods, or may be a chip, a chip system or a processor that supports the terminal to realize the above-described methods. The communication apparatus may be used to realize the methods described in the above method embodiments with reference to the descriptions of the above-described method embodiments.

The communication apparatus 1400 may include one or more processors 1410. The processor 1410 may be a general purpose processor or a dedicated processor, such as, a baseband processor or a central processor. The baseband processor is used for processing communication protocols and communication data. The central processor is used for controlling the communication apparatus (e.g., base station, baseband chip, terminal, terminal chip, DU, or CU), executing computer programs, and processing data of the computer programs.

Optionally, the communication apparatus 1400 may include one or more memories 1420 on which computer programs 1440 may be stored. The processor 1410 executes the computer programs 1440 to cause the communication apparatus 1400 to perform the methods described in the above method embodiments. Optionally, data may also be stored in the memory 1420. The communication apparatus 1400 and the memory 1420 may be provided separately or may be integrated together.

Optionally, the communication apparatus 1400 may also include a transceiver 1450 and an antenna 1460. The transceiver 1450 may be referred to as transceiver unit, transceiver machine, or transceiver circuit, for realizing the transceiver function. The transceiver 1450 may include a receiver and a transmitter. The receiver may be referred to as receiver machine or receiving circuit, for realizing the receiving function. The transmitter may be referred to as transmitter machine or transmitting circuit, for realizing the transmitting function.

Optionally, the communication apparatus 1400 may also include one or more interface circuits 1470. The interface circuits 1470 are used to receive code instructions and transmit them to the processor 1410. The processor 1410 runs the code instructions to cause the communication apparatus 1400 to perform the method described in the method embodiments.

In an implementation, the processor 1410 may include a transceiver for implementing the receiving and transmitting functions. The transceiver may be, for example, a transceiver circuit, an interface, or an interface circuit. The transceiver circuit, interface, or interface circuit for implementing the receiving and transmitting functions may be separated or may be integrated together. The transceiver circuit, interface, or interface circuit described above may be used for code/data reading and writing, or may be used for signal transmission or delivery.

In an implementation, the processor 1410 may store a computer program 1430, which runs on the processor 1410 and may cause the communication apparatus 1400 to perform the methods described in the method embodiments above. The computer program 1430 may be solidified in the processor 1410, in which case the processor 1410 may be implemented by hardware.

In an implementation, the communication apparatus 1400 may include circuits. The circuits may implement the sending, receiving or communicating function in the preceding method embodiments. The processors and transceivers described in this disclosure may be implemented on integrated circuits (ICs), analog ICs, radio frequency integrated circuits (RFICs), mixed signal ICs, application specific integrated circuits (ASICs), printed circuit boards (PCBs), and electronic devices. The processors and transceivers can also be produced using various IC process technologies such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon-germanium (SiGe), gallium arsenide (GaAs) and so on.

The communication apparatus in the above description of embodiments may be a network device or a terminal, but the scope of the communication apparatus described in the disclosure is not limited thereto, and the structure of the communication apparatus may not be limited by FIG. 14. The communication apparatus may be a stand-alone device or may be part of a larger device. For example, the described communication apparatus may be:
(1) a stand-alone IC, chip, chip system or subsystem;
(2) a collection of ICs including one or more ICs, optionally, the collection of ICs may also include storage components for storing data and computer programs;
(3) an ASIC, such as a modem;
(4) modules that can be embedded within other devices;
(5) receivers, terminals, smart terminals, cellular phones, wireless devices, handheld machines, mobile units, in-vehicle devices, network devices, cloud devices, artificial intelligence devices, and the like; and
(6) others.

The case where the communication apparatus may be a chip or a chip system is described with reference to the schematic structure of the chip shown in FIG. 15. The chip shown in FIG. 15 includes a processor 1510 and an interface 1520. There may be one or more processors 1510, and there may be multiple interfaces 1520.

Optionally, the chip further includes a memory 1530 used for storing necessary computer programs and data.

It is understandable by those skilled in the art that various illustrative logical blocks and steps listed in the embodiments of the disclosure may be implemented by electronic hardware, computer software, or a combination of both. Whether such function is implemented by hardware or software depends on the particular application and the design requirements of the entire system. Those skilled in the art may, for each particular application, use various methods to implement the described function, but such implementation should not be construed as being beyond the scope of protection of the embodiments of the disclosure.

Embodiments of the disclosure also provide a system. The system includes a communication apparatus as a terminal and a communication apparatus as a network device in the preceding embodiment of FIG. 13. Or, the system includes a communication apparatus as a terminal and a communication apparatus as a network device in the preceding embodiment of FIG. 14.

The disclosure also provides a readable storage medium having instructions stored thereon. When the instructions are executed by a computer, the function of any of the method embodiments described above is implemented.

The disclosure also provides a computer program product. When the computer program product is executed by a computer, the function of any of the method embodiments described above is implemented.

The above embodiments may be implemented in whole or in part by software, hardware, firmware, or any combination thereof. When implemented using software, it may be implemented, in whole or in part, in the form of a computer program product. The computer program product includes one or more computer programs. When loading and executing the computer program on the computer, all or part of processes or functions described in the embodiments of the disclosure is implemented. The computer may be a general-purpose computer, a dedicated computer, a computer network, or other programmable devices. The computer program may be stored in a computer-readable storage medium or transmitted from one computer-readable storage medium to another computer-readable storage medium. For example, the computer program may be transmitted from one web site, computer, server, or data center to another web site, computer, server, or data center, in a wired manner (e.g., by using coaxial cables, fiber optics, or digital subscriber lines (DSLs) or wirelessly (e.g., by using infrared wave, wireless wave, or microwave). The computer-readable storage medium may be any usable medium to which the computer has access to or a data storage device such as a server and a data center integrated by one or more usable mediums. The usable medium may be a magnetic medium (e.g., floppy disk, hard disk, and tape), an optical medium (e.g., a high-density digital video disc (DVD)), or a semiconductor medium (e.g., a solid state disk (SSD)).

It is understood that the term "multiple" in the disclosure refers to two or more, which is similar for other quantifiers. The term "and/or" describes a relation of associated objects, which indicates three relations, for example, "A and/or B" indicates that A exists alone, A and B both exist, and B exists alone. The character "/" generally indicates that the associated objects prior to and after the character "j" is an "or" relation. The terms "a", "said" and "the" in the singular form are also intended to include the plural form, unless the context clearly indicates otherwise.

It is further understood that although the operations are depicted in the accompanying drawings in a particular order in the embodiments of the disclosure, it should not be construed as requiring that the operations are performed in the particular sequence shown or in a serial sequence, or that all of the operations shown are performed to obtain the desired results. Multitasking and parallel processing may be advantageous in particular environments.

It is understandable that although the terms "first", "second", and "third" may be used in the disclosure to describe various information, the information should not be limited to these terms. These terms are only used to distinguish the same type of information from each other. For example, without departing from the scope of the disclosure, the first information may also be referred to as the second information, and similarly, the second information may also be referred to as the first information. Depending on the context, the term "if' as used herein can be interpreted as "when", "while" or "in response to determining".

The term "at least one" in the disclosure may also be described as one or more, and the term "multiple" may be two, three, four, or more, which is not limited in the disclosure. In the embodiments of the disclosure, for a type of technical features, "first", "second", and "third", and "A", "B", "C" and "D" are used to distinguish different technical features of the type, the technical features described using the "first", "second", and "third", and "A", "B", "C" and "D" do not indicate any order of precedence or magnitude.

The correspondences shown in the tables in this disclosure may be configured or may be predefined. The values of information in the tables are merely examples and may be configured to other values, which are not limited by the disclosure. In configuring the correspondence between the information and the parameter, it is not necessarily required that all the correspondences illustrated in the tables must be configured. For example, the correspondences illustrated in certain rows in the tables in this disclosure may not be configured. For another example, the above tables may be adjusted appropriately, such as splitting, combining, and the like. The names of the parameters shown in the titles of the above tables may be other names that can be understood by the communication apparatus, and the values or representations of the parameters may be other values or representations that can be understood by the communication apparatus. Each of the above tables may also be implemented with other data structures, such as, arrays, queues, containers, stacks, linear tables, pointers, chained lists, trees, graphs, structures, classes, heaps, and Hash tables.

The term "predefine" in this disclosure may be understood as define, define in advance, store, pre-store, pre-negotiate, pre-configure, solidify, or pre-fire.

Those skilled in the art may realize that the units and algorithmic steps of the various examples described in combination with the embodiments disclosed herein are capable of being implemented in the form of electronic hardware, or a combination of computer software and electronic hardware. Whether these functions are performed in the form of hardware or software depends on the specific application and design constraints of the technical solution. Those skilled in the art may use different methods to implement the described functions for each particular application, but such implementations should not be considered as beyond the scope of the disclosure.

It is clearly understood by those skilled in the field to which it belongs that, for the convenience and brevity of description, the specific working processes of the systems, apparatuses, and units described above can be referred to the corresponding processes in the preceding method embodiments, and will not be repeated herein.

Other embodiments of the disclosure will be apparent to those skilled in the art from consideration of the specification and practice of the disclosure disclosed here. This application is intended to cover any variations, uses, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the appended claims.

## Claims

1. A global navigation satellite system (GNSS) measurement method, performed by a terminal, comprising:
performing a GNSS measurement in a connected state in response to expiration of current GNSS position information of the terminal.

2. The method of claim 1, wherein performing the GNSS measurement in the connected state in response to the expiration of the current GNSS position information of the terminal, comprises:
maintaining a radio resource control (RRC) connection between the terminal and a network device at the expiration of the current GNSS position information, wherein the terminal supports a wireless communication system and a GNSS simultaneously.

3. The method of claim 2, wherein, before maintaining the RRC connection between the terminal and the network device at the expiration of the current GNSS position information, the method further comprises:
sending first indication information to the network device, wherein the first indication information is configured to indicate whether the terminal supports the wireless communication system and the GNSS simultaneously.

4. The method of claim 3, wherein before sending the first indication information to the network device, the method further comprises:
determining a measurement duration required for the GNSS measurement of the terminal and indicating the measurement duration to the network device.

5. The method of claim 4, wherein indicating the measurement duration to the network device, comprises:
indicating the measurement duration synchronically through the first indication information.

6. The method of any one of claims 1-5, wherein before performing the GNSS measurement for the terminal in the connected state, the method further comprises:
obtaining measurement configuration information of the GNSS measurement agreed upon by a protocol or indicated by a network, wherein the measurement configuration information comprises a measurement gap of the GNSS measurement; and
performing the GNSS measurement within the measurement gap configured for the terminal.

7. The method of claim 6, wherein the measurement configuration information of the GNSS measurement is indicated by the network, wherein the measurement configuration information is determined based on first indication information sent by the terminal to a network device.

8. The method of claim 1, wherein, before performing the GNSS measurement in the connected state in response to the expiration of the current GNSS position information of the terminal, the method further comprises:
sending second indication information indicating that the current GNSS position information is going to expire to the network device.

9. The method of claim 8, wherein before sending the second indication information indicating that the current GNSS position information is going to expire to the network device, the method further comprises:
obtaining an expiration time of the current GNSS position information, and indicating the expiration time to the network device.

10. The method of claim 9, wherein indicating the expiration time to the network device, comprises:
indicating the expiration time synchronically through the second indication information.

11. The method of claim 1, wherein, before performing the GNSS measurement in the connected state in response to the expiration of the current GNSS position information of the terminal, the method further comprises:
receiving measurement confirmation information sent by a network device, wherein the measurement confirmation information is configured to indicate that the terminal is capable of performing the GNSS measurement.

12. A global navigation satellite system (GNSS) measurement method, performed by a network device, comprising:
determining that current GNSS position information of a terminal has expired, and causing the terminal to maintain in a connected state and to perform a GNSS measurement.

13. The method of claim 12, wherein before determining that the current GNSS position information of the terminal has expired, and causing the terminal to maintain in the connected state and to perform the GNSS measurement, the method further comprises:
receiving first indication information sent by the terminal, wherein the first indication information is configured to indicate whether the terminal supports a wireless communication system and a GNSS simultaneously; and
maintaining a radio resource control (RRC) connection between the terminal and the network device at expiration of the current GNSS position information of the terminal, in response to the first indication information indicating that the terminal supports the wireless communication system and the GNSS simultaneously.

14. The method of claim 13, wherein before determining that the current GNSS position information of the terminal has expired, and causing the terminal to maintain in the connected state and to perform the GNSS measurement, the method further comprises:
obtaining a measurement duration required for the GNSS measurement of the terminal.

15. The method of claim 14, wherein obtaining the measurement duration required for the GNSS measurement of the terminal, comprises:
determining the measurement duration based on the first indication information.

16. The method of any one of claims 13-15, wherein before determining that the current GNSS position information of the terminal has expired, and causing the terminal to maintain in the connected state and to perform the GNSS measurement, the method further comprises:
determining measurement configuration information of the GNSS measurement based on the first indication information and sending the measurement configuration information to the terminal, wherein the measurement configuration information comprises a measurement gap of the GNSS measurement.

17. The method of any one of claims 12-15, wherein before determining that the current GNSS position information of the terminal has expired, and causing the terminal to maintain in the connected state and to perform the GNSS measurement, the method further comprises:
receiving second indication information sent by the terminal, wherein the second indication information indicates that the current GNSS position information is going to expire.

18. The method of claim 17, wherein before determining that the current GNSS position information of the terminal has expired, and causing the terminal to maintain in the connected state and to perform the GNSS measurement, the method further comprises:
obtaining an expiration time of the current GNSS position information.

19. The method of claim 18, wherein obtaining the expiration time of the current GNSS position information, comprises:
determining the expiration time based on the second indication information.

20. The method of claim 12, wherein before determining that the current GNSS position information of the terminal has expired, and causing the terminal to maintain in the connected state and to perform the GNSS measurement, the method further comprises:
sending measurement confirmation information to the terminal, wherein the measurement confirmation information is configured to indicate that the terminal is capable of performing the GNSS measurement.

21. A communication apparatus, comprising:
a processing module, configured to perform a GNSS measurement in a connected state in response to expiration of current GNSS position information of the terminal.

22. A communication apparatus, comprising:
a processing module, configured to, determine that current GNSS position information of a terminal has expired, and cause the terminal to maintain in a connected state and to perform a GNSS measurement.

23. A communication apparatus, comprising: a processor, and a memory having computer programs stored thereon, wherein when the computer programs are executed by the processor, the communication apparatus is caused to execute the method of any one of claims 1-11.

24. A communication apparatus, comprising: a processor, and a memory having computer programs stored thereon, wherein when the computer programs are executed by the processor, the communication apparatus is caused to execute the method of any one of claims 12-20.

25. A communication apparatus, comprising: a processor and an interface circuit; wherein,
the interface circuit is configured to receive code instructions and transmit the code instructions to the processor; and
the processor is configured to run the code instructions to perform the method of any one of claims 1-11.

26. A communication apparatus, comprising: a processor and an interface circuit; wherein
the interface circuit is configured to receive code instructions and transmit the code instructions to the processor; and
the processor is configured to run the code instructions to perform the method of any one of claims 12-20.

27. A computer readable storage medium having instructions stored thereon, wherein when the instructions are executed, the method of any one of claims 1-11 is implemented.

28. A computer readable storage medium having instructions stored thereon, wherein when the instructions are executed, the method of any one of claims 12-20 is implemented.
